# EUROPÄISCHE PATENTSCHRIFT

(11) **EP 1 515 113 B1**
(45) Veröffentlichungstag und Bekanntmachung des Hinweises auf die Patenterteilung: **11.11.2009**
(21) Anmeldenummer: 04028612.2
(22) Anmeldetag: 27.09.2001
(51) Int. Cl.: G01B 5/00, G01B 5/008, G01B 21/04

(54) **Koordinatenmessgerät mit vermindertem Einfluss der Wärmeausdehnung**
Coordinate measuring device with reduced influence of thermal expansion
Appareil de mesure de coordonnees a influence reduite de la dilatation thermique

(30) Priorität: 27.09.2000 DE 10047953
(43) Veröffentlichungstag der Anmeldung: 16.03.2005
(62) Teilanmeldung aus: 01985748.1
(73) Patentinhaber: Carl Zeiss Industrielle Messtechnik GmbH, 73447 Oberkochen (DE)
(72) Erfinder: Jacobs, Klaus, 89551 Königsbronn-Ochsenberg (DE); Woletz, Franz, 73457 Essingen (DE)
(74) Vertreter: Schorr, Frank Jürgen

(56) Entgegenhaltungen:
- EP-A- 0 126 888
- DD-A- 248 865
- DE-A- 19 821 274
- US-A- 4 763 420
- US-A- 4 815 213

## Beschreibung

Die Erfindung betrifft ein Koordinatenmeßgerät mit einem räumlich verfahrbaren Abtastkopf zum Abtasten eines auf einer Meßauflage anordenbaren zu vermessenden Objekts.

Ein solches Koordinatenmeßgerät dient zum Ausmessen von Oberflächenkoordinaten bzw. Konturen des zu vermessenden Objekts, wobei ein Tastende des Abtastkopfes in die Nähe von oder in Kontakt mit einer Vielzahl von Punkten auf der Oberfläche des Objekts gebracht wird und bei Kontakt mit bzw. Annäherung an diese Oberfläche die Auslenkung des Tastendes bezüglich einer Referenzposition, beispielsweise einen Nullpunkt der Meßauflage, erfaßt wird. Aus einer Vielzahl von solchen geeignet durchgeführten Messungen kann dann die Oberfläche des Objekts als Datensatz rekonstruiert werden.

Das Tastende kann zur Messung entweder in direkten Kontakt mit dem Objekt gebracht werden, wobei dieses Kontakt durch Auslenkung des Tastendes aus einer Ruhelage oder Betätigen eines mit dem Tastende gekoppelten Schalters registriert wird. Es kann die Messung aber auch berührungslos ausgeführt werden, wenn die Spitze des Tastkopfes an die Oberfläche des Objekts lediglich angenähert ist und das Tastende über eine berührungslos arbeitende Annäherungsregistrierung verfügt, beispielsweise mittels eines Laser- oder Ultraschallsensors.

Herkömmliche Koordinatenmeßgeräte umfassen zur räumlichen Verfahrung des Abtastkopfes unter anderem einen Sockel zum Aufstellen auf einer Unterlage, ein bei Blickrichtung von oben beidseits der Meßauflage und oberhalb der Meßauflage angeordnetes Paar zueinander paralleler Führungsschienen, an denen in deren Längsrichtung verschiebbar ein Brückenträger gelagert ist. An dem Brückenträger wiederum ist der Tastkopf in Längsrichtung des Brückenträgers und in Vertikalrichtung zum Abtasten des Objekts verschiebbar gehaltert.

Der Meßbereich des Koordinatenmeßgeräts in Vertikalrichtung ist dabei mitbestimmt durch die Höhe, mit der die beiden Führungsschienen über der Meßauflage angeordnet sind, so daß sich der Sockel von der Unterlage bis zu den Führungsschienen über eine Höhe erstreckt, die der Ausdehnung des Meßbereichs in Vertikalrichtung in etwa entspricht. Temperatureinwirkungen auf diesen Sockel können zur Folge haben, daß die beiden Führungsschienen selbst auf unterschiedlichen Höhen angeordnet sind und damit die Messung verfälscht wird. Temperaturgradienten im Bereich des Sockels haben dabei eine Verkippung der Schienen aus der Horizontalen zur Folge, was die Meßgenauigkeit ebenfalls beschränkt.

Maßnahmen zur Unterdrückung eines solchen Temperatureinflusses sind aus dem Dokument DE 198 21 274 A1 bekannt. Bei diesem bekannten Koordinatenmeßgerät umfaßt der Sockel ein Grundgerüst zum Aufstellen auf der Unterlage sowie vier sich vertikal nach oben erstreckende Stützstäbe, auf denen die Führungsschienen gelagert sind. Die Stützstäbe sind aus einem Material mit einem möglichst niedrigen Wärmeausdehnungskoeffizienten gefertigt, so daß Temperaturänderungen einen vergleichsweise geringen Einfluß auf die Höhe und horizontale Ausrichtung der Führungsschienen haben. Zudem umfaßt der Sockel einen an dem Grundgerüst abgestützten Betonkörper mit Aussparungen, in denen die Stützstäbe angeordnet sind. Der Betonkörper isoliert die Stützstäbe thermisch gegenüber der Umgebung, so daß auch dadurch Temperatureinflüsse unterdrückt sind.

Zur Bestimmung der Verschiebungsposition des Brückenträgers an den Führungsschienen ist an einer der Führungsschienen ein Maßstab angebracht, welcher von einem von dem Brückenträger getragenen Abtastsensor abgelesen wird. Zur Bestimmung der Verschiebeposition des Tastkopfes in Längsrichtung des Brückenträgers ist an dem Brückenträger ferner ein Maßstab angebracht, welcher von einem weiteren Abtastsensor abgelesen wird, der an einem Schlitten gehaltert ist, welcher den Tastkopf in Vertikalrichtung verschiebbar trägt. Der Maßstab an der Führungsschiene bzw. dem Brückenträger ist aus einem Glas mit niedriger Wärmeausdehnung gefertigt, wobei die Führungsschiene bzw. der Brückenträger aus einem Material gefertigt ist, welches eine im Vergleich zu dem Glasmaßstab größere Wärmeausdehnung aufweist. Um Spannungen in dem Glasmaßstab bei Temperaturänderungen zu vermeiden, ist der Glasmaßstab im Bereich eines Längsendes desselben an der Führungsschiene bzw. zum Brückenträger festgelegt, während die übrigen Bereiche des Maßstabs in Längsrichtung desselben verschiebbar an der Führungsschiene bzw. dem Brückenträger gelagert sind.

Trotz dieser vorangehend beschriebenen Maßnahmen hat es sich als wünschenswert herausgestellt, die Meßgenauigkeit des herkömmlichen Koordinatenmeßgeräts weiter zu erhöhen.

Demgemäß ist es eine Aufgabe der vorliegenden Erfindung, ein Koordinatenmeßgerät mit einer erhöhten Meßgenauigkeit bereitzustellen. Diese Aufgabe wird jeweils gelöst durch ein Koordinatenmeßgerät mit den Merkmalen des unabhängigen Anspruchs 1 bzw. des unabhängigen Anspruchs 4.

Der unabhängige Patentanspruch 1 definiert hierbei ein Koordinatenmeßgerät mit einem räumlich verfahrbaren Abtastkopf zum Abtasten eines auf einer Meßauflage anordenbaren zu vermessenden Objekts, umfassend:
- ein - gesehen von oben - beidseits der Meßauflage und mit Abstand in Vertikalrichtung von dieser angeordnetes Paar zueinander paralleler Führungschienen und
- einen quer zu den Führungsschienen sich erstreckenden und an diesen in deren Längsrichtung verschiebbar gelagerten Brückenträger,
wobei der Tastkopf zum Abtasten des Objekts an dem Brückenträger in dessen Längsrichtung und in Vertikalrichtung verschiebbar gehaltert ist,
wobei an wenigstens einer der Führungsschienen ein Maßstab festgelegt ist, um einen Verschiebeweg des Brückenträgers entlang der Führungsschiene zu bestimmen, wobei Wärmeausdehnungskoeffizienten des Maßstabs und der Führungsschiene voneinander verschieden sind, und
wobei ein - gesehen in Maßstab-Längsrichtung - zentraler Bereich desselben an der Führungsschiene in Maßstab-Längsrichtung festgelegt ist und daß beidseits von dem an der Führungsschiene festgelegten Bereich entfernte Bereiche des Maßstabs gegenüber der Führungsschiene in Maßstab-Längsrichtung verschiebbar sind, wobei der an der Führungsschiene festgelegte Bereich des Maßstabs - gesehen in Längsrichtung des Brückenträgers - über einem Zentrum der Meßauflage angeordnet ist.

Der unabhängige Patentanspruch 4 definiert außerdem ein Koordinatenmeßgerät mit einem räumlich verfahrbaren Abtastkopf zum Abtasten eines auf einer Meßauflage anordenbaren zu vermessenden Objekts, umfassend:
- ein - gesehen von oben - beidseits der Meßauflage und mit Abstand in Vertikalrichtung von dieser angeordnetes Paar zueinander paralleler Führungsschienen und
- einen quer zu den Führungsschienen sich erstreckenden und an diesen in deren Längsrichtung verschiebbar gelagerten Brückenträger,
wobei der Tastkopf zum Abtasten des Objekts an dem Brückenträger in dessen Längsrichtung und in Vertikalrichtung verschiebbar gehaltert ist
wobei an dem Brückenträger ein Maßstab festgelegt ist, um einen Verschiebeweg des Tastkopfes entlang dem Brückenträger zu bestimmen, wobei Wärmeausdehnungskoeffizienten des Maßstabs und des Brückenträgers voneinander verschieden sind, und
wobei ein - gesehen in Maßstab-Längsrichtung - zentraler Bereich desselben an dem Bruckenträger in Maßstab-Längsrichtung festgelegt ist und daß beidseits von dem an dem Brückenträger festgelegten Bereich entfernte Bereiche des Maßstabs gegenüber dem Brückenträger in Maßstab-Längsrichtung verschiebbar sind, wobei der an dem Brückenträger festgelegte Bereich des Maßstabs - gesehen in Längsrichtung der Führungsschiene - über einem Zentrum der Meßauflage angeordnet ist.

Dabei liegt der Erfindung die Erkenntnis zugrunde, daß die Verschiebung eines nicht an der Führungsschiene bzw. dem Brückenträger festgelegten Bereichs des Maßstabs auf Grund thermischer Einflüsse zu einer Erhöhung des Meßfehlers beiträgt.

Im Vergleich zu einem Maßstab, der mit seinem Längsende an der Führungsschiene bzw. dem Brückenträger festgelegt ist, wird ein durch Wärmeausdehnung verursachter Meßfehler in etwa halbiert. Da der an der Führungsschiene festgelegte Bereich des Maßstabs bei Blick in Richtung des Brückenträgers über einem Zentrum der Meßauflage angeordnet ist, ergibt sich eine weitgehend symmetrische Anordnung und ein über im Wesentlichen den gesamten Meßbereich einen vergleichsweise geringer Meßfehler. Zu eben diesem Zweck ist der an dem Brückenträger festgelegte Bereich des Maßstabs bei Blick in Längsrichtung der Führungsschiene über dem Zentrum der Meßauflage angeordnet.

Einen besonderen Vorteil entwickelt die zentrale Festlegung der Maßstäbe dann, wenn das Koordinatenmeßgerät einen Drehtisch aufweist. Ein solcher Drehtisch erlaubt eine Verdrehung des auf dem Drehtisch angeordneten zu vermessenden Objekts bezüglich des Abtastkopfes um eine sich im wesentlichen vertikal erstreckende Drehachse. Es ist dann der zentrale Bereich des Maßstabs, der an der Führungsschiene bzw. dem Brückenträger festgelegt ist, bezüglich des Drehzentrums des Drehtisches ausgerichtet, und zwar in Blickrichtung senkrecht zur Erstreckungsrichtung des Maßstabs. Insbesondere fluchtet in dieser Blickrichtung die Mitte des festgelegten Bereichs des Maßstabs mit der Drehachse des Drehtischs. Es befindet sich dann die Drehachse des Drehtischs weitgehend unbeeinflußt von Temperaturänderungen immer an derselben Stelle in dem Meß-Koordinatensystem des Koordinatenmeßgeräts.

Vorteilhafterweise ist die Mitte des an der Führungsschiene angebrachten Maßstabes ferner mittig zwischen den beiden die Führungsschienen stützenden Stützstäben angeordnet, und die Mitte des an dem Brückenträger angebrachten Maßstabes ist bevorzugterweise mittig zwischen den Führungsschienen angebracht.

Der an der Führungsschiene bzw. dem Brückenträger in Maßstablängsrichtung festgelegte Bereich des Maßstabs ist quer hierzu vorzugsweise verlagerbar, um eine möglichst spannungsfreie Halterung des Maßstabs zu erzielen. Eine solche Halterung wird vorzugsweise mit einem Rollenlager realisiert. Ferner ist es bevorzugt, daß der Maßstab in seinen von dem festgelegten Bereich entfernten Bereichen quer zur Maßstablängsrichtung bezüglich der Führungsschiene bzw. dem Brückenträger festgelegt ist, um ebenfalls eine möglichst spannungsfreie Halterung des Maßstabs zu erreichen. Zu eben diesem Zweck ist der Maßstab in diesen entfernten Bereichen allerdings auch vorzugsweise wiederum in Maßstablängsrichtung verlagerbar gehalten, wozu, weiter bevorzugt, ebenfalls ein Rollenlager vorgesehen ist.

Die vorangehend geschilderten Rollenlager umfassen vorzugsweise eine maßstabsseitige Rollfläche und eine führungsschienenseitige bzw. brückenträgerseitige Rollfläche, wobei zwischen den beiden Rollflächen wenigstens eine und vorzugsweise eine Mehrzahl Kugeln angeordnet ist.

Hierbei ist es bevorzugt, daß die beiden Rollflächen durch Magnetkraft gegen die Kugeln gedrückt werden, wozu vorzugsweise eine der beiden Rollflächen durch einen Permanentmagneten gebildet ist und die andere Rollfläche durch ein magnetisches Material, beispielsweise Eisen, gebildet ist.

Im Folgenden werden Ausführungsbeispiele der Erfindung anhand von Zeichnungen näher erläutert. Hierbei zeigt:
- Figur 1: ein erfindungsgemäßes Koordinatenmeßgerät,
- Figur 2: einen Teil des in Figur 1 gezeigten Koordinatenmeßgeräts mit einem abgenommenen Sockelteil,
- Figur 3: eine Detailansicht der Figur 2 im Schnitt,
- Figur 4: einen schematischen Schnitt durch das Koordinatenmeßgerät der Figur 1,
- Figur 5: einen Flansch zur Kopplung einer Stützstange an eine Führungsschiene des Koordinatenmeßgeräts der Figur 1,
- Figur 6: eine Federanordnung zur elastischen Kopplung eines Stützstabes an ein Sockelteil des Koordinatenmeßgeräts der Figuren 1 und 2, und
- Figur 7: eine schematische Darstellung zur Halterung eines Maßstabs an einer Führungsschiene des Koordinatenmeßgeräts der Figur 1.

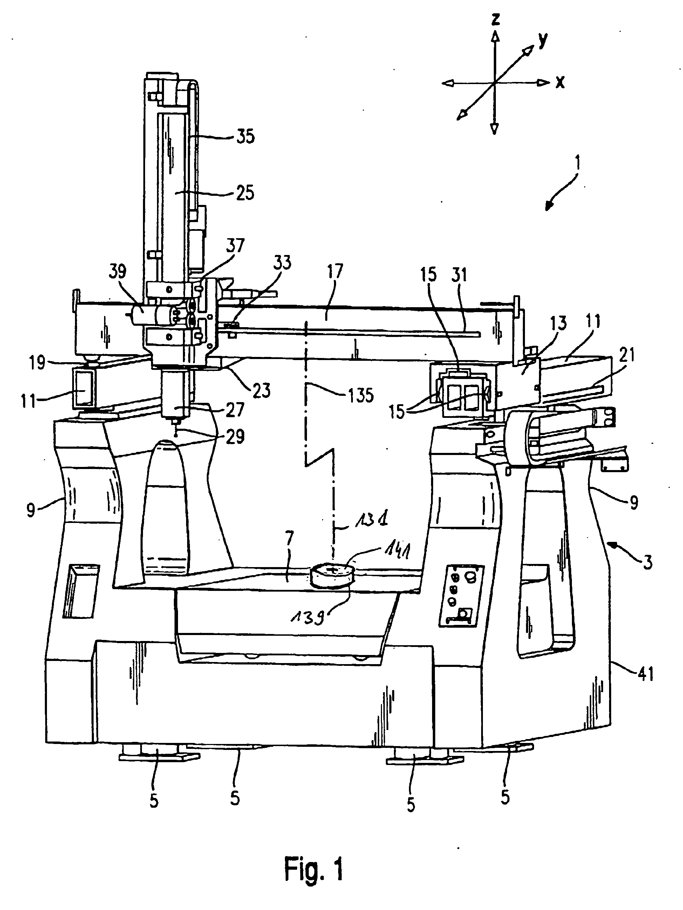

Ein in Figur 1 gezeigtes Koordinatenmeßgerät 1 entspricht in seinem Grundaufbau dem in Dokument DE 198 21 274 A1 offenbarten Koordinatenmeßgerät und umfaßt einen Sockel 3 mit Füßen 5 zum Aufstellen des Koordinatenmeßgeräts 1 auf einem Boden. Wie aus Figur 1 ersichtlich ist, weist der Sockel 3 eine U-förmige Struktur auf, wobei in einem mittleren Bereich ein Meßtisch 7 angeordnet ist, um darauf ein zu vermessendes Objekt zu plazieren. Der Meßtisch 7 beinhaltet einen Drehtisch 139, auf dessen Oberfläche 141 das zu vermessende Objekt zur Anordnung kommen kann. Der Drehtisch 139 dient dazu, das auf ihm angeordnete Objekt relativ zu dem übrigen Koordinatenmeßgerät um eine sich vertikal erstreckende Drehachse 131 zu verdrehen. Die Drehachse 131 ist bezüglich der Meßauflage 7 in etwa zentriert, allerdings kann die Drehachse auch neben dem Zentrum der Meßauflage, das heißt außerhalb der Mitte der U-förmigen Struktur des Sockels, angeordnet sein.

Beidseits des Meßtischs 7 erstreckt sich jeweils eine Seitenwange 9 des Sockels 3 nach oben, wobei oben auf jeder Wange 9 jeweils eine Führungsschiene 11 aus einem Keramikmaterial angebracht ist. Die Führungsschienen 11 sind horizontal und parallel zueinander ausgerichtet und erstrecken sich in einer in Figur 1 mit y bezeichneten Richtung.

Über der in Figur 1 rechten Führungsschiene 11 greift von oben ein in Längsrichtung der Führungsschiene 11 verschiebbarer Führungsschlitten 13, welcher über Luftkissen 15 an der Führungsschiene 11 geführt ist. An dem Führungsschlitten 13 ist ein Brückenträger 17 befestigt, der sich in eine zur Erstreckungsrichtung der Führungsschiene 11 orthogonale Richtung quer bis über die in Figur 1 linke Führungsschiene 11 hin erstreckt, auf welcher er sich mittels eines Luftkissens 19 abstützt. Der Brückenträger 17 ist somit in Längsrichtung der Führungsschienen 11 leichtgängig und präzise verschiebbar, wobei seine Position in Längsrichtung der Führungsschienen 11 über einen an der in Figur 1 rechten Führungsschiene 11 angeordneten Maßstab 21 und einen an dem Führungsschlitten 13 angebrachten und in Figur 1 nicht sichtbaren optischen Abtastkopf erfaßt wird. An dem Brückenträger 17 ist ein weiterer Führungsschlitten 23 in Längsrichtung des Brückenträgers und einer in Figur 1 mit x bezeichneten Richtung leichtgängig verschiebbar gelagert. An dem Schlitten 23 wiederum ist eine sich in vertikaler Richtung (Richtung des mit z bezeichneten Pfeils in Figur 1) erstreckende Führung bzw. Pinole 25 verschiebbar gehalten, an dessen unterem Ende ein Tastkopf 27 befestigt ist, der ein Tastende 29 zur Annäherung an das zu vermessende Objekt trägt.

Die Position des Tastendes 29 in x-Richtung wird über einen an dem Brückenträger 17 angebrachten Maßstab 31 und einen an dem Führungsschlitten 23 angebrachten und den Maßstab 31 ablesenden optischen Abtastkopf 33 erfaßt, während die Position des Tastendes 29 in Z-Richtung über einen an der Pinole 25 angebrachten Maßstab 35 und einen zugehörigen an dem Führungsschlitten 23 angebrachten optischen Abtastkopf 37 erfaßt wird.

Für die Verschiebung des Brückenträgers 17 entlang der Führungsschienen 11 in y-Richtung, die Verschiebung der Pinole 25 entlang dem Brückenträger 17 in X-Richtung und der Pinole 25 bezüglich dem Brückenträger in Z-Richtung ist jeweils ein motorisierter Antrieb vorgesehen, wobei in Figur 1 lediglich ein Reibradantrieb 39 für die Verschiebung der Pinole 25 in Z-Richtung sichtbar ist.

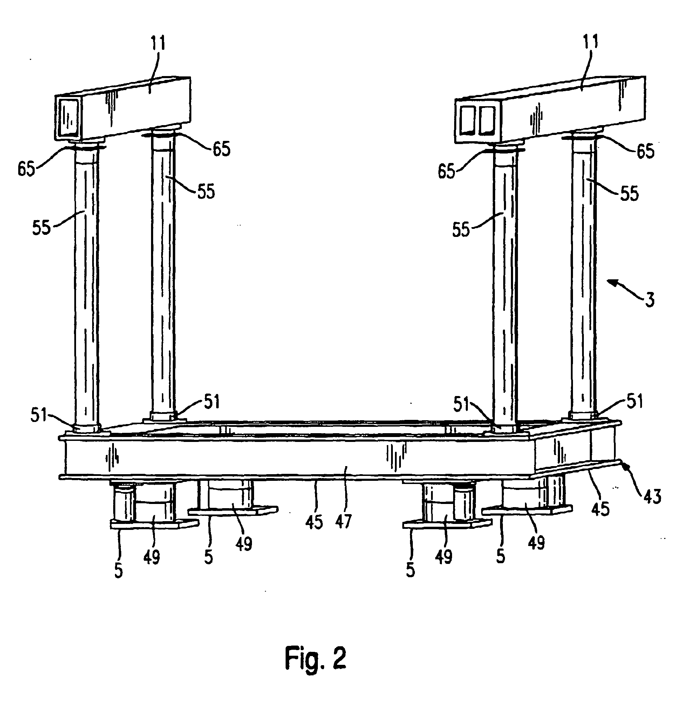

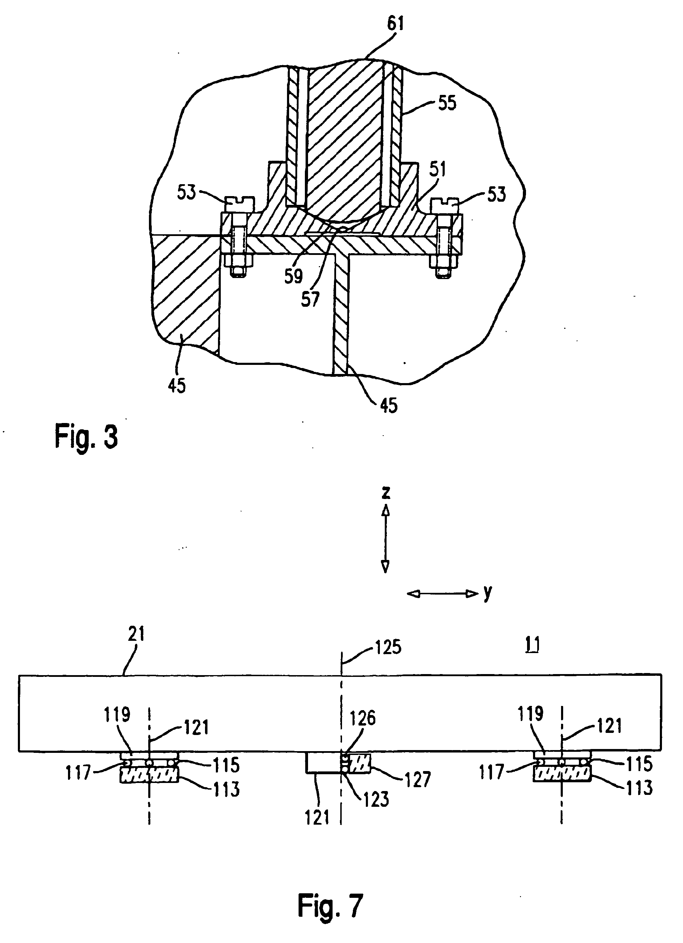

Die in Figur 1 von außen sichtbare Hülle des Sockels 3 ist durch einen Polymerbetonkörper 41 gebildet, der um einen aus Figur 2 ersichtlichen Kern 43 des Sockels 3 herum angebracht ist. Der Kern 43 des Sockels 3 umfaßt einen aus mehreren Doppel-T-Trägern 45 gebildeten Basisrahmen 47, an dem die Füße 5 über Schwingungsdämpfer 49 angebracht sind. In einer jeden Ecke des Basisrahmens 45 ist auf dessen Oberseite jeweils ein Flansch 51 angebracht, der in Figur 3 im Detail dargestellt ist. Der Flansch 51 ist an den Doppel-T-Trägern 45 mittels Schrauben 53 befestigt. In den Flansch 51 ist von oben ein Rohr 55 eingesteckt und fest an dem Flansch 51 gehalten.

Der aus dem Basisrahmen 47, den Flanschen 51 und den Rohren 55 bestehende Kern 43 des Sockels 3 ist von dem Polymerbeton des Polymerbetonkörpers 41 umgossen, wobei sich die Rohre 55 somit innerhalb des Polymerbetonkörpers 41 erstrecken und wobei obere Enden 63 der Rohre 55 und eine obere Fläche 89 des Polymerbetonkörpers oben miteinander bündig abschließen.

Im Zentrum des Flansches 51 ist eine sich nach oben konisch erweiternde Lagerfläche 57 für ein unteres balliges Ende 59 einer Stützstange 61 ausgebildet. Die Stützstange 61 erstreckt sich in Z-Richtung über das Ende 63 des Rohres 55 hinaus, und an einem oberen Ende der Stützstange 61 ist ein Flansch 65 angeschraubt, der als Auflager für die Führungsschiene 11 dient.

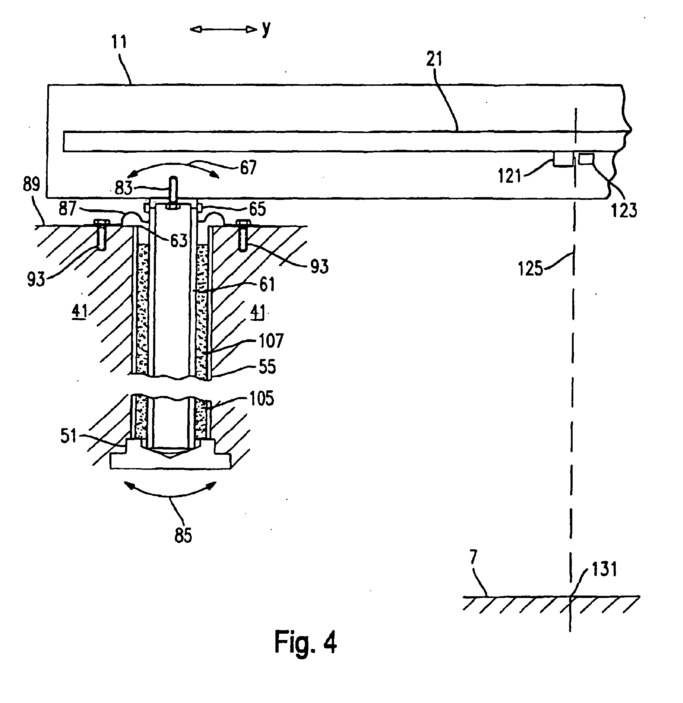

Das ballige Ende 59 des Stützstabes 61 legt diesen über die konische Fläche 57 an dem Basisrahmen 47 des Sockels 3 in y-Richtung fest, wobei das ballige Ende 59 zusammen mit der konischen Fläche 57 allerdings ein Schwenklager für den Stützstab 61 bildet, so daß dieser in einer in Figur 4 mit einem Pfeil 67 bezeichneten Richtung um den Flansch 51 in einer yz-Ebene aus der Vertikalen auslenkbar ist.

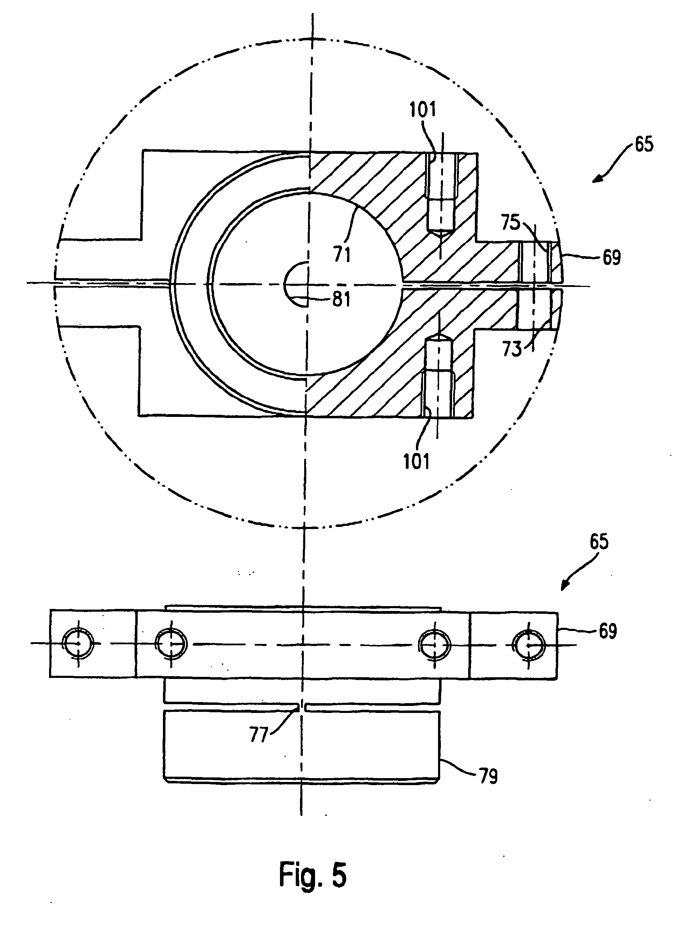

Der obere Flansch 65 ist in Figur 5 im Detail dargestellt und umfaßt ein Spannteil 69 mit einer kreisförmigen Anlagefläche 71 zur Anlage an einen Außenmantel des Stützstabes 61 an dessen oberen Ende, wobei mittels zweier in Bohrungen 73 und Gewindebohrungen 75 eingeschraubte Schrauben (in Figur 5 nicht dargestellt) das Spannteil 69 an dem oberen Ende des Stützstabes 61 festgespannt ist. Das Spannteil 69 ist über zwei dünne Stege 77 mit einem Auflageteil 79 des Flansches 65 für die Führungsschiene 11 verbunden, wobei an dem Auflageteil 79 eine Bohrung 81 für eine Schraube 83 zur Verbindung mit der Führungsschiene 11 vorgesehen ist. Die beiden dünnen Stege 77 sind an gegenüberliegenden Seiten des Flansches 65 angeordnet, so daß eine Verbindungslinie zwischen den beiden Stegen 77 sich in X-Richtung erstreckt. Die beiden Stege 77 bilden jeweils eine elastische Verbindung zwischen dem Auflageteil 79 und dem Klemmteil 69 des Flansches 65, so daß durch die beiden Stege 77 zusammen der Stützstab 61 gelenkig an die Führungsschiene 11 gekoppelt ist, wobei eine Auslenkung des Stabs 61 um den oberen Flansch 65 in einer in Figur 4 mit einem Pfeil 85 angezeigten Richtung in der yz-Ebene aus der Vertikalen heraus erfolgen kann.

Indem ein jeder Stützstab 61 um den unteren Flansch 51 in der Richtung 67 auslenkbar ist und um den oberen Flansch 65 in der Richtung 85 auslenkbar ist, kann die über zwei Stützstäbe 61 abgestützte Führungsschiene 11 bezüglich dem Sockel 3 in y-Richtung parallel verschoben werden, und sie kann um die in Figur 4 dargestellte Ruhestellung mit vertikaler Orientierung der Stützstäbe 61 ausgelenkt werden. Ferner kann sich die Führungsschiene 11 bezüglich dem Sockel 3 thermisch ausdehnen, wobei die oberen Enden der beiden Stützstäbe 61 voneinander weggespreizt werden.

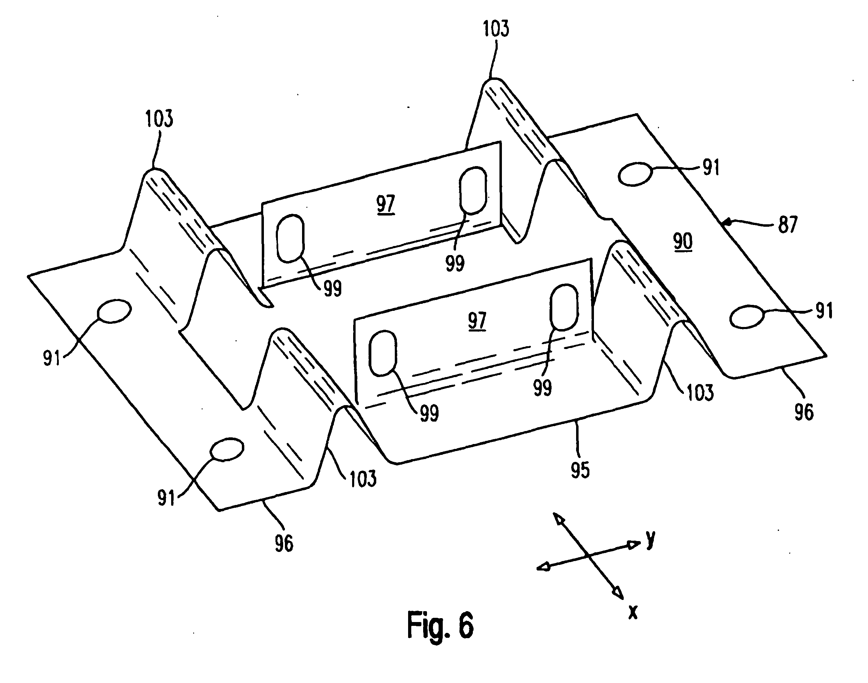

In Figur 6 ist eine Federanordnung 87 im Detail dargestellt, durch die das obere Ende jedes Stützstabs 61 an die mit dem oberen Ende 63 des Rohrs 61 bündige obere Fläche 89 des Betonkörpers 41 gekoppelt ist. Die Federanordnung 87 ist aus einem rechteckförmigen Blech herausgestanzt und in der in Figur 6 dargestellten Weise gebogen. Das Blech 90 weist zwei Seitenbereiche 96 mit jeweils zwei Löchern 91 zur Befestigung der Federanordnung 87 an dem Betonkörper 61 mittels Schrauben 93 auf.

Ein zentraler Bereich 95 des Blechs 90 weist zwei nach oben gebogene Wangen 97 zur Befestigung an dem oberen Flansch 65 auf. Hierzu sind in einer jeden Wange 97 zwei Langlöcher 99 für Schrauben vorgesehen, die in Sacklöcher 101 an dem Spannteil 69 des oberen Flansches 65 eingeschraubt werden. Über die an dem zentralen Bereich 95 hochgebogenen Wangen 97 des Blechs 90 koppelt die Federanordnung 87 die Führungsschiene 11 in X-Richtung an dem Betonkörper 41 des Sockels 3, wobei die Federanordnung 87 für diese Kopplung in X-Richtung eine relativ harte Federkonstante bereitstellt. Die Federkonstante für die Kopplung in y-Richtung ist im Vergleich hierzu wesentlich geringer, da der mittlere Bereich 95 zur Befestigung des Flansches 65 beidseits über aufgebogene Wölbungen 103 des Blechs 90 an dessen Seitenbereiche 96 gekoppelt ist, in welchen die Löcher 91 zur Verbindung mit dem Betonkörper 41 vorgesehen sind. Dadurch ist der Stützstab 61 in der Richtung 67 mit einer wesentlich geringeren Federkraft aus der Vertikalen auslenkbar als in einer zu der Richtung 67 senkrechten Schwenkrichtung um den unteren Flansch 51.

In dem Betonkörper 41 ist ein Hohlraum 105 flüssigkeitsdicht ausgebildet, welcher gegenüber dem Betonkörper 41 nach unten durch den unteren Flansch 51 und nach den Seiten durch das Rohr 55 begrenzt und nach oben offen ist. In diesem Hohlraum 105 steht der Stützstab 61 mit Abstand von dem Rohr 55, wobei der Zwischenraum zwischen Rohr 55 und Stützstab 61 mit einer viskosen Flüssigkeit 107 gefüllt ist. In dem bevorzugten Ausführungsbeispiel beträgt die Viskosität der Flüssigkeit etwa 20.000 mm/sec², und die Flüssigkeit kann durch ein geeignetes Öl oder eine synthetische Flüssigkeit mit der entsprechenden Viskosität gebildet sein. Diese Anordnung wirkt als Viskositätsdämpfer zwischen Führungsschiene 11 und Sockel 3, wobei die Stützstange 61 eine mit der Führungsschiene 11 gekoppelte erste Komponente des Viskositätsdämpfers bildet und das in dem Betonkörper 41 eingebettete Rohr 55 als mit dem Sockel 3 verbundene zweite Komponente des Viskositätsdämpfers wirkt. Durch die Bereitstellung dieses Viskositätsdämpfers zwischen Führungsschiene 11 und Sockel 3 werden Schwingungen der Führungsschiene 11 relativ zu dem Sockel und insbesondere Schwingungen in Richtung des Pfeils 67 in Figur 4 wirksam unterdrückt, so daß hierdurch die Meßgenauigkeit des Koordinatenmeßgeräts 1 deutlich erhöht wird.

In Figur 7 ist die Anbringung des Maßstabs 21 an der Führungsschiene 11 im Detail dargestellt. Der Maßstab 21 besteht aus Zerodur, einem Glasmaterial mit einem Wärmeausdehnungskoeffizienten von nahezu Null. Die Aus Keramikmaterial gefertigte Führungsschiene 11 hat hingegen einen Wärmeausdehnungskoeffizienten, der größer ist als der des Glasmaßstabs 21. An der Führungsschiene 11 sind zwei Magnete 113 festgelegt, welche eine horizontal orientierte polierte Fläche 115 aufweisen. Auf jeder Fläche 115 liegen drei Kugeln 117, auf welchen wiederum eine Eisenplatte 119 mit einer polierten horizontalen Fläche aufliegt. Die Eisenplatten 119 sind an dem Maßstab 21 befestigt, und zwar zentriert um dessen Bessel-Punkte 121. Gegen die Wirkung der Schwerkraft ist der Maßstab 21 somit an seinen Bessel-Punkten 121 abgestützt, so daß sich auf Grund der Schwerkraftwirkung eine minimale Durchbiegung des Maßstabs 21 ergibt. Durch die Magnete 113 und die von diesen angezogenen Eisenplatten 119 ist der Maßstab 21 somit in Z-Richtung an der Führungsschiene 11 festgelegt, jedoch in y-Richtung verlagerbar bezüglich der Führungsschiene 11 gestützt.

In einem zentralen Bereich des Maßstabs 21 ist an diesem eine weitere Eisenplatte 123 derart angeklebt, daß eine von deren sich vertikal erstreckenden Seitenflächen 123 in einer Symmetrieebene 125 des Maßstabs 21 angeordnet ist, welche sich in Z-X-Richtung erstreckt. Auf der Fläche 123 liegen zwei Kugeln 126 mit ihrer einen Seite an, während an ihrer anderen Seite ein an der Führungsschiene 11 befestigter Magnet 127 anliegt und durch seine Magnetwirkung gegen die an dem Maßstab 21 befestigte Eisenplatte 121 gezogen wird.

Die Symmetrieebene 125 des Maßstabes 21 ist weiterhin auch symmetrisch zu den die Führungsschiene 11 stützenden Stützstäben 61 angeordnet, also z. B. mittig zwischen den oberen Flanschen 65 bzw. Schrauben 83.

Die Symmetrieebene 125, das heißt der Bereich, an dem der Maßstab 21 an der Führungsschiene L festgelegt ist, ist insbesondere auch eine Symmetrieebene hinsichtlich der thermischen Ausdehnung des Maßstabes 21 relativ zur Führungsschiene 11. Dies bedeutet, daß thermische Ausdehnungen des Maßstabes symmetrisch zur Symmetrieebene 125 erfolgen, selbst wenn die Längen des Maßstabes ausgehend von der Symmetrieebene 125 zu seinen beiden Enden hin geometrisch voneinander verschieden sind. Die Symmetrieebene des Maßstabes ist dabei zum übrigen Koordinatenmeßgerät derart ausgerichtet, daß die Drehachse 131 des Drehtischs 139 darin enthalten ist. Damit ist das Zentrum des Drehtischs in y-Richtung des Koordinatensystems des Koordinatenmeßgeräts weitgehend unabhängig von Temperaturänderungen immer an der selben Stelle angeordnet.

An der Fläche der Führungsschiene 11 (in x-Richtung) ist der Maßstab 21 aufgesprengt, das heißt es ist zwischen der Oberfläche der Führungsschiene 11 und der dieser zuweisenden Oberfläche des Maßstabs 21 eine Ölschicht eingebracht, welche eine Adhäsionskraft bereitstellt, so daß der Maßstab 21 sich nicht von der Führungsschiene 11 löst.

Durch diese Anordnung ist der Maßstab 21 mit seiner Mitte an der Führungsschiene 11 in seiner Längsrichtung (y-Richtung) festgelegt, allerdings in z-Richtung verlagerbar.

Hierbei ist der Magnet 127 an der Führungsschiene 11 so angeordnet, daß die Symmetrieebene 125 des Maßstabs 21 gesehen in X-Richtung senkrecht über einem Zentrum des Meßtischs 7 bzw. der Drehachse 131 des Drehtischs 139 angeordnet ist (vergleiche Figur 4).

Es ist somit der Maßstab 21 in seiner Mitte 125 an der Führungsschiene 11 festgelegt, und eine zwischen dem Maßstab 21 und der Führungsschiene 11 unterschiedliche Wärmeausdehnung kann durch Bewegung der Rollen 117 im Bereich der Auflage des Maßstabs 21 an seinen Bessel-Punkten 121 ausgeglichen werden. Da zudem die Mitte 125 des Maßstabs 21 über dem Zentrum 131 des Meßbereichs 7 angeordnet ist, ergeben sich auf Grund von Wärmeausdehnungen besonders geringe Meßfehler beim Ablesen der Position des Führungsschlittens 13 auf der Führungsschiene 11.

Der Maßstab 31 ist an dem Brückenträger 17 in einer Weise angebracht, die der Anbringung des Maßstabes 21 an der Führungsschiene 11 analog ist. Die Anbringung des Maßstabes 31 an den Brückenträger 17 erfolgt dabei ebenso, wie dies in Figur 7 für den Maßstab 21 an der Führungsschiene 11 dargestellt ist, so daß sich eine eigene Darstellung der Anbringung des Maßstabs 31 an dem Brückenträger 17 erübrigt. Es bleibt allerdings zu ergänzen, daß auch der Maßstab 31 eine Symmetrieebene 135 aufweist, welche bei Blick in y-Richtung senkrecht über dem Zentrum des Meßtischs 7 bzw. der Drehachse 131 des Drehtischs 139 angeordnet ist, so daß auch bei der Bestimmung der Position des Tastendes 29 in X-Richtung das Ablesen des Maßstabs 31 auch bei unterschiedlichen Temperaturen zu besonders geringen Meßfehlern führt.

Ferner ist die Mitte des Maßstabes 31 auch zentral zwischen den beiden Führungsschienen 11 angeordnet, so daß auch der Maßstab 31 selbst bezüglich der Führungsschienen 11 symmetrisch angeordnet ist.

Das vorangehend beschriebene Ausführungsbeispiel der Erfindung ist besonders vorteilhaft dahingehend, daß die Stützstäbe 61, welche ja die Funktion haben, die Führungsschiene 11 an dem Sockel 3 vertikal abzustützen, gleichzeitig auch als Komponenten des Viskosedämpfers genutzt werden. Es ist andererseits auch denkbar, von den Stützstäben 61 unabhängige Viskosedämpfer zwischen Führungsschiene 11 und Sockel 3 vorzusehen. In einem solchen Fall muß kein flüssigkeitsdichter Raum in dem Sockel vorgesehen werden, was insbesondere dann, wenn die Wangen 9 des Sockels 3 als Mineralgußkörper 41 gefertigt sind, die Herstellung vereinfacht.

Ferner ist auch vorgesehen, die zentrale Festlegung eines Maßstabs über einem Zentrum des Meßbereichs, z.B. einer Drehachse eines Drehtischs, auch an einem Koordinatenmeßgerät einzusetzen, , dessen beide Führungsschienen nicht über Stützstäbe 61 sondern anders am Sockel abgestützt sind. Ferner ist dies auch ein Koordinatenmeßgerät, welches nicht ein Paar von Führungsschienen 11, sondern nur eine einzige Führungsschiene zur Verschiebung des Tastendes in y-Richtung aufweist.

In dem vorangehenden Ausführungsbeispiel sind die Stützstäbe aus Invar-Stahl gebildet. Jedoch sind auch andere Materialien günstig, welche einen geringen Wärmeausdehnungskoeffizienten aufweisen. Beispiele dafür sind Zerodur und gewisse kohlefaserverstärkte Kunststoffe. Anstatt des Polymerbetons können auch andere Materialien, wie beispielsweise Granit, Mineralguß oder andere Betone eingesetzt werden, um den Sockel zu bilden.

Die in Figur 6 dargestellte Federanordnung 87 koppelt die Führungsschiene 11 an den Sockel 3 mit Federkonstanten, die in y-Richtung geringer sind als in x-Richtung. Es ist andererseits auch denkbar, die Führungsschiene 11 auch in x-Richtung mit einer niedrigeren Federkonstante an den Sockel 3 zu koppeln, wozu beispielsweise die Federanordnung dann den aufgewölbten Bereichen 103 entsprechende quer angeordnete weitere aufgewölbte Bereiche umfassen kann, um die Wangen 97 zu halten.

Außerdem kann die Viskosität des viskosen Mediums von den vorangegebenen Wertabweichungen je nach geometrischer Auslegung des Viskosedämpfers können demgemäß wesentlich größere oder kleinere Werte der Viskosität gewählt werden.

## Patentansprüche

1. Koordinatenmeßgerät mit einem räumlich verfahrbaren Abtastkopf (27) zum Abtasten eines auf einer Meßauflage (7) anordenbaren zu vermessenden Objekts, umfassend:
- ein - gesehen von oben - beidseits der Meßauflage und mit Abstand in Vertikalrichtung von dieser angeordnetes Paar zueinander paralleler Führungsschienen (11) und
- einen quer zu den Führungsschienen (11) sich erstreckenden und an diesen in deren Längsrichtung (y) verschiebbar gelagerten Brückenträger (17),
wobei der Tastkopf (27) zum Abtasten des Objekts an dem Brückenträger (17) in dessen Längsrichtung (x) und in Vertikalrichtung (z) verschiebbar gehaltert ist, und
wobei an wenigstens einer der Führungsschienen (11) ein Maßstab (21) festgelegt ist, um einen Verschiebeweg des Brückenträgers (17) entlang der Führungsschiene (11) zu bestimmen, und wobei Wärmeausdehnungskoeffizienten des Maßstabs (21) und der Führungsschiene (11) voneinander verschieden sind,
**dadurch gekennzeichnet, daß** ein - gesehen in Maßstab-Längsrichtung (y) - zentraler Bereich (125) desselben an der Führungsschiene (11) in Maßstab-Längsrichtung (y) festgelegt ist und daß beidseits von dem an der Führungsschiene (11) festgelegten Bereich (125) entfernte Bereiche (121) des Maßstabs (21) gegenüber der Führungsschiene (11) in Maßstab-Längsrichtung (y) verschiebbar sind, wobei der an der Führungsschiene (11) festgelegte Bereich (125) des Maßstabs - gesehen in Längsrichtung (x) des Brückenträgers (17) - über einem Zentrum (131) der Meßauflage (7) angeordnet ist.

2. Koordinatenmeßgerät nach Anspruch 1, wobei die Meßauflage (7) eine relativ zu dem Tastkopf (27) um eine Drehachse (131) verdrehbare Auflage (141) umfaßt und wobei der festgelegte Bereich (125) des Maßstabs - gesehen in Längsrichtung (x) des Brückenträgers (17) - mit der Drehachse (131) fluchtet.

3. Koordinatenmeßgerät nach Anspruch 1 oder 2, wobei die Führungsschiene an zwei mit Abstand voneinander angeordneten Orten in Vertikalrichtung gestützt ist und wobei der an der Führungsschiene (11) festgelegte Bereich (125) des Maßstabes - gesehen in Längsrichtung (x) des Brückenträgers (17) - mittig zwischen den beiden Orten, an denen die Führungsschiene (11) abgestützt ist, angeordnet ist.

4. Koordinatenmeßgerät mit einem räumlich verfahrbaren Abtastkopf (27) zum Abtasten eines auf einer Meßauflage (7) anordenbaren zu vermessenden Objekts, insbesondere nach einem der Ansprüche 1 bis 3, umfassend:
- ein - gesehen von oben - beidseits der Meßauflage (7) und mit Abstand in Vertikalrichtung von dieser angeordnetes Paar zueinander paralleler Führungsschienen (11) und
- einen quer zu den Führungsschienen (11) sich erstreckenden und an diesen in deren Längsrichtung verschiebbar gelagerten Brückenträger (17),
wobei der Tastkopf (27) zum Abtasten des Objekts an dem Brückenträger (17) in dessen Längsrichtung (x) und in Vertikalrichtung (z) verschiebbar gehaltert ist, und
wobei an dem Brückenträger (17) ein Maßstab (31) festgelegt ist, um einen Verschiebeweg des Tastkopfes (27) entlang dem Brückenträger (17) zu bestimmen, und wobei Wärmeausdehnungskoeffizienten des Maßstabs (31) und des Brückenträgers (17) voneinander verschieden sind,
**dadurch gekennzeichnet, daß** ein - gesehen in Maßstab-Längsrichtung (x) - zentraler Bereich (135) desselben an dem Brückenträger (17) in Maßstab-Längsrichtung (x) festgelegt ist und daß beidseits von dem an dem Brückenträger (17) festgelegten Bereich (135) entfernte Bereiche des Maßstabs (31) gegenüber dem Brückenträger (17) in Maßstab-Längsrichtung (x) verschiebbar sind, wobei der an dem Brückenträger (17) festgelegte Bereich (135) des Maßstabs (31) - gesehen in Längsrichtung (y) der Führungsschiene (11) - über einem Zentrum (131) der Meßauflage (7) angeordnet ist.

5. Koordinatenmeßgerät nach Anspruch 4, wobei die Meßauflage (7) eine relativ zu dem Tastkopf (27) um eine Drehachse (131) verdrehbare Auflage (141) umfaßt und wobei der festgelegte Bereich (135) des Maßstabs - gesehen in Maßstablängsrichtung - mit der Drehachse (131) fluchtet.

6. Koordinatenmeßgerät nach Anspruch 4 oder 5, wobei der an dem Brückenträger (17) festgelegte Bereich (135) des Maßstabes (31) - gesehen in Längsrichtung (y) der Führungsschiene (11) - mittig zwischen den beiden Führungsschienen (11) angeordnet ist.

7. Koordinatenmeßgerät nach einem der Ansprüche 1 bis 6, wobei der Maßstab (21, 31) in dem festgelegten Bereich (125, 135) in seiner Querrichtung bezüglich der Führungsschiene (11) bzw. dem Brückenträger (17) verlagerbar ist.

8. Koordinatenmeßgerät nach Anspruch 7, wobei ein Rollenlager (121, 123, 127) vorgesehen ist, um den Maßstab (21, 31) in in seiner Querrichtung verlagerbar und in seiner Längsrichtung festgelegt an der Führungsschiene (11) bzw. dem Brückenträger (17) zu haltern.

9. Koordinatenmeßgerät nach Anspruch 7 oder 8, wobei der Maßstab (21, 31) in seinen von dem an der Führungsschiene (11) bzw. dem Brückenträger (17) festgelegten Bereich (125, 135) entfernten Bereichen quer zur Maßstab-Längsrichtung bezüglich der Führungsschiene (11) bzw. dem Brückenträger (17) festgelegt ist.

10. Koordinatenmeßgerät nach Anspruch 9, wobei ein Rollenlager (113, 117, 119) vorgesehen ist, um den Maßstab (21, 31) in in seiner Maßstab-Längsrichtung verlagerbar und in seiner Querrichtung festgelegt an der Führungsschiene (11) bzw. dem Brückenträger (17) zu haltern.

11. Koordinatenmeßgerät nach Anspruch 8 oder 10, wobei das Rollenlager zwei sich gegenüberliegende Rollflächen (115) aufweist, von denen eine an dem Maßstab (21, 31) festgelegt ist und die andere an der Führungsschiene (11) bzw. dem Brückenträger (17) festgelegt ist und zwischen denen wenigstens eine Kugel (117) angeordnet ist.

12. Koordinatenmeßgerät nach Anspruch 11, wobei die beiden Rollflächen (115) magnetisch gegen die Kugel (117) gedrückt sind.

## Claims

1. A coordinate measuring device comprising a spatially displaceable scanning head (27) for scanning an object to be measured, said object being positionable on a measuring support (7), comprising:
- a pair of guide rails (11) extending paralle to one another, one rail being disposed - viewed from above - on each side of the measuring support (7) spaced apart from the same in vertical direction, and
- a bridge girder (17) extending transversely of the guide rails (11) and being displaceably mounted on the latter in longitudinal direction (y) thereof,
- wherein the scanning head (27) for scanning the object is displaceably mounted on the bridge girder (17) in the longitudinal direction (x) and in the vertical direction (z) thereof, and
wherein a scale (21) is fixed in position on at least one of the guide rails (11) to determine a shift path of the bridge girder (17) along the guide rail (11), and wherein thermal expansion coefficients of the scale (21) and the guide rail (11) are different from each other,
**characterized in that** - viewed in longitudinal direction (y) of the scale - a central portion (125) of the same is fixed in position on the guide rail (11) in the scale's longitudinal direction (y), and **in that** portions (121) of the scale (21) on both sides of and distant from said portion (125) which is fixed in position on the guide rail are displaceable relative to the guide rail (11) in the scale's longitudinal direction (y), the portion (125) of the scale which is fixed in position on the guide rail being disposed - viewed in longitudinal direction (x) of the bridge girder (17) - above a center (131) of the measuring support (7).

2. The coordinate measuring device according to claim 1, wherein the measuring support (7) comprises a supporting surface (141) which is rotatable relative to the scanning head (27) about an axis of rotation (131), and wherein the portion (125) of the scale which is fixed in position is in alignment - viewed in longitudinal direction (x) of the bridge girder (17) - with the axis of rotation (131).

3. The coordinate measuring device according to claim 1 or 2, wherein the guide rail is supported in vertical direction at two spaced apart locations, and wherein the portion (125) of the scale which is fixed in position on the guide rail (11) is disposed - viewed in longitudinal direction (x) of the bridge girder (17) - centrally between said two locations at which the guide rail (11) is supported.

4. A coordinate measuring device including a spatially displaceable scanning head (27) for scanning an object to be measured, said object being positionable on a measuring support (7), in particular according to one of claims 1 to 3, comprising:
- a pair of guide rails (11) extending paralle to one another, one rail being disposed - viewed from above - on each side of the measuring support (7) and spaced apart from the same in vertical direction, and
- a bridge girder (17) extending transversely of the guide rails (11) and being displaceably mounted on the latter in longitudinal direction thereof,
- wherein the scanning head (27) for scanning the object is displaceably mounted on the bridge girder (17) in longitudinal direction (x) and vertical direction (z) thereof, and
wherein a scale (31) is fixed in position on the bridge girder (17) to determine a shift path of the scanning head (27) along the bridge girder (17), and wherein thermal expansion coefficients of the scale. (31) and the bridge girder (17) are different from each other,
**characterized in that** - viewed in longitudinal direction (x) of the scale - a central portion (135) of the same is fixed in position on the bridge girder (17) in the scale's longitudinal direction (x), and **in that** portions of the scale (31) on both sides of and distant from said portion (135) which is fixed in position on the bridge girder (17) are displaceable relative to the bridge girder (17) in the scale's longitudinal direction (x), the portion (135) of the scale (31) which is fixed in position on the bridge girder (17) being disposed - viewed in longitudinal direction (y) of the guide rail (11) - above a center (131) of the measuring support (7).

5. The coordinate measuring device according to claim 4, wherein the measuring support (7) comprises a supporting surface (141) which is rotatable relative to the scanning head (27) about an axis of rotation (131), and wherein the portion (135) of the scale which is fixed in position is in alignment - viewed in the scale's longitudinal direction- with the axis of rotation (131).

6. The coordinate measuring device according to claim 4 or 5, wherein the portion (135) of the scale (31) which is fixed in position on the bridge girder (17) is disposed - viewed in longitudinal direction (y) of the guide rail (11) - centrally between the two guide rails (11).

7. The coordinate measuring system according to one of claims 1 to 6, wherein the portion (125, 135) of the scale (21, 31) fixed in position is displaceable in transverse direction relative to the guide rail (11) or the bridge girder (17), respectively.

8. The coordinate measuring device according to claim 7, wherein a roller bearing (121, 123, 127) is provided in order to support the scale (21, 31) to be displaceable in its transverse direction and fixed in position in its longitudinal direction on the guide rail (11) and the bridge girder (17), respectively.

9. The coordinate measuring system according to claim 7 or 8, wherein the portions of the scale (21, 31) which are remote from the portion (125, 135) which is fixed in position on the guide rail (11) or the bridge girder (17), respectively, is fixed in position transversely to the scale's longitudinal direction relative to the guide rail (11) or the bridge girder (17), respectively.

10. The coordinate measuring system according to claim 9, wherein a roller bearing (113, 117, 119) is provided in order to support the scale (21, 31) to be displaceable in transverse direction thereof and to hold it fixed in position in its longitudinal direction on the guide rail (11) or the bridge girder (17), respectively.

11. The coordinate measuring system according to claim 8 or 10, wherein the roller bearing includes two opposite roller surfaces (115), one of which is fixed in position on the scale (21, 31) and the other one on the guide rail (11) and the bridge girder (17), respectively, at least one ball (117) being disposed between said roller surfaces.

12. The coordinate measuring device according to claim 11, wherein the two roller surfaces (115) are magnetically urged against the ball (117).

## Revendications

1. Appareil de mesure de coordonnées comportant une sonde (27) mobile dans l'espace, destinée à analyser un objet à mesurer pouvant être disposé sur un support de mesure (7), comprenant :
- une paire de rails de guidage parallèles l'un à l'autre, disposés - tel que vu depuis le dessus - de chaque côté du support de mesure et selon un écart à celui-ci dans la direction verticale, et
- un châssis-pont (17) qui s'étend perpendiculairement aux rails de guidage (11) et est logé au niveau de ceux-ci de façon mobile dans leur direction longitudinale (y),
où la sonde (27), pour analyser l'objet, est maintenue au niveau du châssis-pont (17) de façon mobile dans sa direction longitudinale (x) et dans sa direction verticale (z), et
où est fixée au niveau d'au moins un des rails de guidage (11) une échelle graduée (2) pour déterminer une course de déplacement du châssis-pont (17) le long du rail de guidage (11), et où les coefficients de dilatation thermique de l'échelle graduée (21) et du rail de guidage (11) sont différents l'un de l'autre,
**caractérisé en ce qu'**une zone centrale (125) - tel que vu dans la direction longitudinale de l'échelle graduée (y) - de celle-ci est fixée au niveau du rail de guidage (11) dans la direction longitudinale de l'échelle graduée (y) et **en ce que** des deux côtés de la zone (125) placée au niveau du rail de guidage (11), des zones éloignées (121) de l'échelle graduée (21) sont mobiles par rapport au rail de guidage (11) dans la direction longitudinale de l'échelle graduée (y), la zone (125) de l'échelle graduée fixée au niveau du rail de guidage (11) - tel que vu dans la direction longitudinale (x) du châssis-pont (17) - étant disposée au-dessus d'un centre (131) du support de mesure (7).

2. Appareil de mesure de coordonnées selon la revendication 1, dans lequel le support de mesure (7) comporte un support (141) pivotant par rapport à la sonde (27) autour d'un axe de rotation (131) et dans lequel la zone fixée (125) de l'échelle graduée - tel que vu dans la direction longitudinale (X) du châssis-pont (17) - est alignée avec l'axe de rotation (131).

3. Appareil de mesure de coordonnées selon la revendication 1 ou 2, dans lequel le rail de guidage est soutenu dans la direction verticale au niveau de deux emplacements disposés avec un écart entre eux et dans lequel la zone (125) de l'échelle graduée fixée au niveau du rail de guidage (11) - tel que vu dans la direction longitudinale (x) du châssis-pont (17) - est disposée au milieu entre les deux emplacements au niveau desquels est appuyé le rail de guidage (11).

4. Appareil de mesure de coordonnées comportant une sonde (27) mobile dans l'espace, destinée à analyser un objet à mesurer pouvant être disposé sur un support de mesure (7), en particulier selon l'une des revendications 1 à 3, et comportant :
- une paire de rails de guidage (11) parallèles l'un à l'autre, disposés - tel que vu depuis le dessus - de chaque côté du support de mesure (7) et selon un écart à celui-ci dans la direction verticale, et
- un châssis-pont (17) qui s'étend perpendiculairement aux rails de guidage (11) et est logé au niveau de ceux-ci de façon mobile dans leur direction longitudinale,
où la sonde (27), pour analyser l'objet, est maintenue au niveau du châssis-pont (17) de façon mobile dans sa direction longitudinale (x) et dans sa direction verticale (z), et
où est fixée au niveau du châssis-pont (17) une échelle graduée (31) pour déterminer une course de déplacement de la sonde (27) le long du châssis-pont (17) et où les coefficients de dilatation thermique de l'échelle graduée (31) et du châssis-pont (17) diffèrent l'un de l'autre,
**caractérisé en ce qu'**une zone centrale (135) - tel que vu dans la direction longitudinale de l'échelle graduée (x) - de celle-ci est fixée au niveau du châssis-pont (17) dans la direction longitudinale de l'échelle graduée (x) et **en ce que** des deux côtés de la zone (135) fixée au niveau du châssis-pont (17), des zones éloignées de l'échelle graduée (31) sont mobiles par rapport au châssis-pont (17) dans la direction longitudinale de l'échelle graduée (x), la zone (135) de l'échelle graduée (31) fixée au niveau du châssis-pont (17) - tel que vu dans la direction longitudinale (y) du rail de guidage (11) - étant disposée au-dessus d'un centre (131) du support de mesure (7).

5. Appareil de mesure de coordonnées selon la revendication 4, dans lequel le support de mesure (7) comporte un support (141) pouvant pivoter par rapport à la sonde (27) autour d'un axe de rotation (131) et dans lequel la zone fixée (135) de l'échelle graduée - tel que vu dans la direction longitudinale de l'échelle graduée - est alignée avec l'axe de pivotement (131).

6. Appareil de mesure de coordonnées selon la revendication 4 ou 5, dans lequel la zone (135) de l'échelle graduée (31) fixée au niveau du châssis-pont (17) - tel que vu dans la direction longitudinale (y) du rail de guidage (11) - est disposée au centre entre les deux rails de guidage (11).

7. Appareil de mesure de coordonnées selon l'une des revendications 1 à 6, dans lequel l'échelle graduée (21, 31) dans la zone fixée (125, 135) peut être déplacée dans sa direction transversale par rapport au rail de guidage (11) ou au châssis-pont (17).

8. Appareil de mesure de coordonnées selon la revendication 7, dans lequel est prévu un roulement à rouleaux (121, 123, 127) pour maintenir au niveau du rail de guidage (11) ou du châssis-pont (17) l'échelle graduée (21, 31) de façon déplaçable dans sa direction transversale et fixée dans sa direction longitudinale.

9. Appareil de mesure de coordonnées selon la revendication 7 ou 8, dans lequel l'échelle graduée (21, 31) est fixée, dans ses zones éloignées de la zone (125, 135) fixée au niveau du rail de guidage (11) ou du châssis-pont (17), transversalement à la direction longitudinale de l'échelle graduée par rapport au rail de guidage (11) ou au châssis-pont (17).

10. Appareil de mesure de coordonnées selon la revendication 9, dans lequel est prévu un roulement à rouleaux (113, 117, 119) pour maintenir au niveau du rail de guidage (11) ou du châssis-pont (17) l'échelle graduée (21, 31) mobile dans sa direction longitudinale d'échelle graduée et fixée dans sa direction transversale.

11. Appareil de mesure de coordonnées selon la revendication 8 ou 10, dans lequel le roulement à rouleaux présente deux surfaces de roulement (115) opposées, parmi lesquelles une est fixée à l'échelle graduée (21, 31) et l'autre est fixée au niveau du rail de guidage (11) ou du châssis-pont (17) et entre lesquelles est disposée au moins une bille (117).

12. Appareil de mesure de coordonnées selon la revendication 11, dans lequel les deux surfaces de roulement (115) sont comprimées contre la bille (117) par voie magnétique.
